Europäisches Patentamt

European Patent Office

Office européen des brevets

(19)

(11) Veröffentlichungsnummer: **0 143 241**
**A1**

(12) # EUROPÄISCHE PATENTANMELDUNG

(21) Anmeldenummer: **84111180.0**

(22) Anmeldetag: **19.09.84**

(51) Int. Cl.⁴: **H 02 P 8/00**

(30) Priorität: **03.10.83 DE 3335924**

(43) Veröffentlichungstag der Anmeldung: **05.06.85**
**Patentblatt 85/23**

(84) Benannte Vertragsstaaten: **DE FR GB IT**

(71) Anmelder: **Siemens Aktiengesellschaft, Berlin und München Wittelsbacherplatz 2, D-8000 München 2 (DE)**

(72) Erfinder: **Kumpfmüller, Hans-Georg, Dipl.-Ing. (FH), Ludwigstrasse 6, D-8404 Wörth (DE)**

(54) **Verfahren und Einrichtung zur Steuerung eines Schrittmotors.**

(57) Die Erfindung betrifft ein Verfahren zur Steuerung eines Schrittmotors (1) durch Steuerbefehle, die die durchzuführenden Schritte und die Beschleunigungscharakteristik bestimmen. Die Steuerbefehle werden über einen Speicher (4) dem Schrittmotor (1) zugeführt. Es ist vorgesehen, daß ein Addierglied (5) nach jedem Steuerbefehl die Summe aller durchzuführenden Schritte bestimmt und als momentanen Sollwert für Richtung und Anzahl der Schritte dem Speicher (4) zuführt. Der Schrittmotor (1) wird mit vorgegebener Beschleunigungscharakteristik (91) beschleunigt, ist mit konstanter Geschwindigkeit (93) bewegbar, und wird über eine dem Bremsweg entsprechende Anzahl von Schritten vor dem angestrebten Endpunkt der Bewegung bei vorgegebener, negativer Beschleunigungscharakteristik (92) abgebremst. Nach jedem durchgeführten Schritt des Schrittmotors (1) wird dessen Position auf eine durch den momentanen Sollwert vorgegebene Sollposition hin um einen Schritt verändert. Der Eingang (31) für Steuerbefehle steht mit einem ersten Eingang (51) des Addiergliedes (5) in Verbindung, dessen zweiter Eingang (52) mit dem Ausgang (43) des Speichers (4) verbunden ist. Der Ausgang (53) des Addiergliedes (5) ist mit dem Eingang (41) des Speichers (4) und dessen Ausgang (43) mit dem Schrittmotor (1) verbunden.

0143241

SIEMENS AKTIENGESELLSCHAFT
Berlin und München

Unser Zeichen
VPA 83 P 3338 E

Verfahren und Einrichtung zur Steuerung
eines Schrittmotors

Die Erfindung betrifft ein Verfahren zur Steuerung eines Schrittmotors mit fester Ausgangsposition durch Steuerbefehle, die Richtung und Anzahl der durchzuführenden Schritte und die Beschleunigungscharakteristik des Schrittmotors bestimmen, wobei die Steuerbefehle über einen Speicher dem Schrittmotor zugeführt werden.

Ein solches Steuersystem eignet sich beispielsweise, um einer Brennkraftmaschine in Abhängigkeit von einem Fahrpedalstellungsgeber eine geeignete Menge Brennstoff einzuspritzen.

Ein zur Durchführung eines derartigen Verfahrens geeignetes Steuersystem ist bekannt (DE-OS 31 14 836). Dabei ist ein Verzögerungsglied einem Steuerorgan, das ein Schrittmotor sein kann, vorgeschaltet. Folgen die Steuersignale in zeitlichen Abständen, die einen festen vorgegebenen Wert unterschreiten, dann wird ein Speicher und ein Verzögerungsglied in Betrieb genommen. Dadurch werden die Steuersignale dem Schrittmotor mit einer Verzögerung zugeleitet, die so bemessen ist, daß der Schrittmotor den Steuersignalen folgen kann. Für jeden Steuerbefehl wird dann einem Kennfeld eine Beschleunigungscharakteristik entnommen.

Ein Steuerverfahren mittels einer derartigen Schaltungsanordnung führt alle Steuerbefehle in chronologischer Reihenfolge aus. Es wird zwar gewährleistet, daß kein Steuerbefehl ausgelassen wird, die Ausführung eines Steuerbefehls kann jedoch in bestimmten Fällen zu spät

Mnl 2 Shi / 26.09.1983

erfolgen. Dadurch ist es möglich, daß der Schrittmotor
noch eine Position einnimmt, die inzwischen verändert
werden sollte.

Der Erfindung liegt die Aufgabe zugrunde, ein Verfahren
zur Steuerung eines Schrittmotors zu entwickeln, das den
Schrittmotor in geringstmöglicher Zeit an sich schnell
ändernde, durch Steuerbefehle vorgegebene Sollpositionen
heranführt.

Diese Aufgabe wird erfindungsgemäß dadurch gelöst,

- daß ein mit dem Speicher verbundenes Addierglied nach
  jedem Steuerbefehl die Summe aller durchzuführenden
  Schritte bestimmt und als momentanen Sollwert für Richtung und Anzahl der Schritte dem Speicher zuführt,

- daß der Schrittmotor mit vorgegebener Beschleunigungscharakteristik beschleunigt wird,

- daß der Schrittmotor mit konstanter Geschwindigkeit
  bewegbar ist,

- daß der Schrittmotor über eine dem Bremsweg entsprechende Anzahl von Schritten vor dem angestrebten Endpunkt der Bewegung bei vorgegebener, negativer Beschleunigungscharakteristik abgebremst wird, und

- daß nach jedem durchgeführten Schritt des Schrittmotors
  dessen Position auf eine durch den momentanen Sollwert
  vorgegebene Sollposition hin um einen Schritt verändert
  wird, wobei der weitere Bewegungsablauf des Schrittmotors von seiner momentanen Position, seiner momentanen Geschwindigkeit und vom momentanen Sollwert abhängt.

Beim Verfahren zur Steuerung eines Schrittmotors nach der Erfindung wird immer, sofort nachdem ein neuer Steuerbefehl eingegangen ist, in einem Addierglied die Summe aller noch nicht ausgeführten Befehle gebildet und einem Speicher zugeführt. Dieser veränderliche momentane Sollwert im Speicher steuert den Schrittmotor. Die Bewegungen des Schrittmotors werden nach jedem vollzogenen Schritt entsprechend der Differenz zwischen dem dann gültigen Sollwert und der momentanen Schrittmotorposition, die von einem mit dem Schrittmotor gekoppelten Steuerglied registriert wird, ausgeführt. Dabei wird der Schrittmotor um einen Schritt bewegt, wonach der Sollwert erneut abgerufen und die Positionsdifferenz gebildet wird.

Der Schrittmotor wird mit einer vorgegebenen Beschleunigung angefahren, mit konstanter Geschwindigkeit bewegt, oder mit einer vorgegebenen negativen Beschleunigung abgebremst. Zur Beschleunigung und zum Abbremsen können dabei mehrere Schritte erforderlich sein. Nach der Erfindung ist es möglich, nach jedem beliebigen Schritt von der Beschleunigungsphase, oder von der gleichmäßig bewegten Phase auf die Bremsphase überzugehen und umgekehrt. Nach Stillstand des Schrittmotors kann sofort eine Beschleunigung in entgegengesetzter Richtung folgen.

Mit diesem Verfahren wird der Vorteil erzielt, daß die Bewegungen des Schrittmotors, zeitlich nur durch träge Massen begrenzt, dem durch die Abfolge der Steuerbefehle vorgegebenen Bewegungsablauf folgen.

Der Schrittmotor führt Steuerbefehle für Positionsänderungen, die nach kurzer Zeit zurückgenommen werden, nicht vollständig aus. Er beschreibt somit eine gegenüber der Folge von Steuerbefehlen zwar geglättete, aber weitgehend an-

0143241

gepaßte Kurve. Ein verzögertes Ausführen aller Steuerbefehle, das sogar eine zum momentanen Steuerbefehl gegenläufige Bewegung des Schrittmotors bewirken kann,
wird durch das Verfahren nach der Erfindung verhindert.

Eine Einrichtung zur Durchführung des Verfahrens weist
ein Addierglied auf, dessen erster Eingang die Steuerbefehle aufnimmt und dessen zweiter Eingang mit dem Ausgang eines Speichers verbunden ist. Der Ausgang des
Addiergliedes ist mit dem Eingang des Speichers verbunden und der Ausgang des Speichers steht mit dem Schrittmotor in Verbindung.

Im Addierglied wird die Summe aus Steuerbefehl und Inhalt des Speichers gebildet und dem Speicher als neuer
Sollwert zugeführt. Die Differenz aus momentaner Position und aktuellem Sollwert steuert den Schrittmotor,
bis nach Eingang eines weiteren Steuerbefehls ein neuer
Sollwert vorliegt. Die flexible Beschleunigungscharakteristik des Schrittmotors ermöglicht es, nach jedem
Schritt den Schrittmotor zu beschleunigen, abzubremsen
oder seine Geschwindigkeit beizubehalten, wodurch der
Schrittmotor auf einen neuen Sollwert reagieren kann.

Die Erfindung soll anhand eines in der Zeichnung grob
schematisch wiedergegebenen Ausführungsbeispiels näher
erläutert werden:

Fig. 1 veranschaulicht ein Schaltbild der Einrichtung
zur Durchführung des erfindungsgemäßen Verfahrens.

Fig. 2 zeigt einen Verlauf der Geschwindigkeit v des
Schrittmotors in Abhängigkeit von der Zeit t nach
dem erfindungsgemäßen Verfahren.

Fig. 3 zeigt Folgen von Positionen x der Regelstange in Abhängigkeit in der Zeit t.

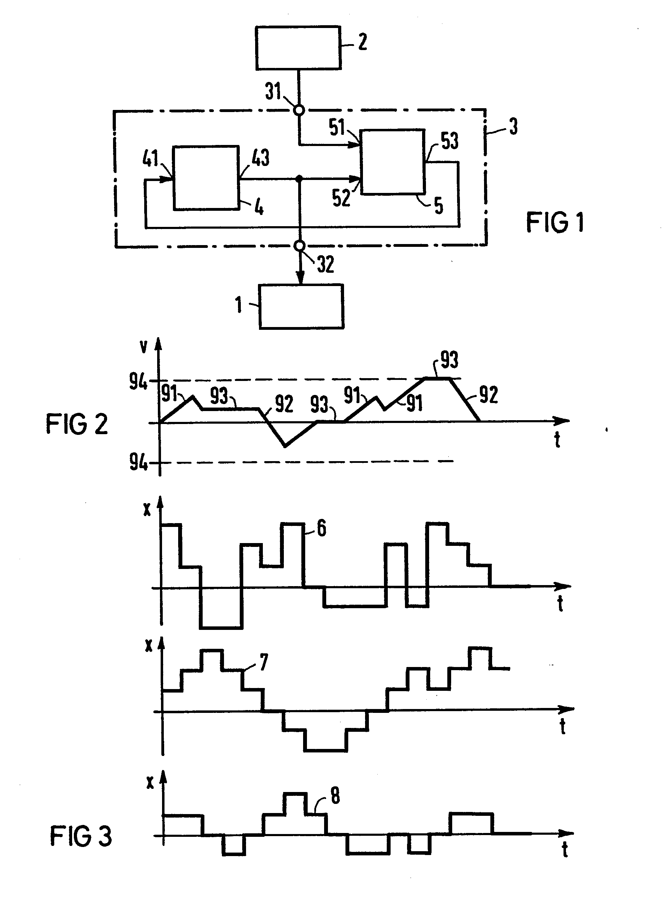

Einem Schrittmotor 1 mit Steuerglied nach Fig. 1, der eine Regelstange an der Einspritzpumpe eines Dieselmotors in Abhängigkeit verschiedener Parameter, z.B. der Motordrehzahl, steuert, werden Steuerbefehle zugeführt. Ein Sensor 2 mit Steuerglied gibt an seinem Ausgang derartige Steuerbefehle ab, die eine gewünschte Position des Schrittmotors 1 beinhalten. Die Steuerbefehle werden einer Steuereinheit 3 an ihrem Eingang 31 zugeführt. Sie enthält einen Speicher 4 und ein Addierglied 5. Mit der Steuereinheit 3 steht an ihrem Ausgang 32 der Schrittmotor 1 mit Steuerglied in Verbindung; man vergl. Fig. 1. Der Eingang 31 der Steuereinheit 3 steht mit einem ersten Eingang 51 des Addiergliedes 5 in Verbindung, mit dessen zweitem Eingang 52 ein Ausgang 43 des Speichers 4 verbunden ist. Ein Ausgang 53 des Addiergliedes 5 ist mit einem Eingang 41 des Speichers 4 verbunden. Nach jedem Steuerbefehl enthält der Speicher 4 somit eine Summe aus altem Speicherinhalt und dem Steuerbefehl. Der Ausgang 43 des Speichers 4 steht auch über den Ausgang 32 der Steuereinheit 3 mit dem Schrittmotor 1 mit Steuerglied in Verbindung, so daß der Inhalt des Speichers 4, der momentane Sollwert, den Schrittmotor 1 steuert. Dabei wird der Schrittmotor 1 um die Differenz aus momentaner Position des Schrittmotors 1 und momentanem Sollwert bewegt.

Der Schrittmotor 1 wird durch sein Steuerglied mit einer vorgegebenen positiven Beschleunigung 91 nach Fig. 2 beschleunigt und über eine dem Bremsweg entsprechende Anzahl von Schritten vor dem angestrebten Endpunkt der Bewegung mit vorgegebener negativer Beschleunigung 92 abgebremst. Sonst bewegt er sich mit konstanten Geschwin-

0143241

digkeiten 93, deren Betrag nicht größer ist als eine Maximalgeschwindigkeit 94. Die Bewegung des Schrittmotors 1 kann nach jedem Schritt verändert werden. Die Geschwindigkeit des Schrittmotors 1 ist in Fig. 2 in Abhängigkeit von der Zeit für einen konkreten Bewegungsablauf dargestellt, wobei sich der Geschwindigkeitsvektor zeitweise umkehrt.

In Fig. 3 ist im oberen Diagramm die für die Regelstange einer Brennkraftmaschine oder für ein anderes zu steuerndes Glied einer anderen Anlage befohlene Position anhand eines Beispiels veranschaulicht. Im mittleren Diagramm ist die Position eines herkömmlichen Systems hierfür wiedergegeben. Im unteren Diagramm ist hierzu die Position für eine erfindungsgemäße Einrichtung dargestellt.

Wenn der Schrittmotor 1 aufgrund der Trägheit des Systems je Steuerbefehl bzw. je Zeiteinheit z.B. nur einen Schritt ausführen kann, erhält man anstelle einer Folge von jeweils für die Regelstange befohlenen Positionen 6 für jedes Zeitintervall eine Folge von wirklichen Positionen 7, 8 des Schrittmotors 1. Nach dem Stand der Technik werden die einzelnen Steuerbefehle nacheinander ausgeführt, wodurch die wirkliche Position 7 von der gewünschten Position 6 stark abweichen kann; man vergl. Fig. 3.

Mit dem Verfahren nach der Erfindung erhält man eine besser angepaßte Folge von Positionen 8 des Schrittmotors 1, da die Position des Schrittmotors 1 nach jedem durchgeführten Schritt um einen Schritt auf die im Speicher 4 enthaltene gewünschte Sollposition 6 hin verändert wird.

2 Patentansprüche

3 Figuren

0143241

<u>Patentansprüche</u>

1. Verfahren zur Steuerung eines Schrittmotors (1) mit fester Ausgangsposition durch Steuerbefehle, die Richtung und Anzahl der durchzuführenden Schritte und die Beschleunigungscharakteristik des Schrittmotors (1) bestimmen, wobei die Steuerbefehle über einen Speicher (4) dem Schrittmotor (1) zugeführt werden,  d a d u r c h g e k e n n z e i c h n e t ,

- daß ein mit dem Speicher (4) verbundenes Addierglied (5) nach jedem Steuerbefehl die Summe aller durchzuführenden Schritte bestimmt und als momentanen Sollwert für Richtung und Anzahl der Schritte dem Speicher (4) zuführt,

- daß der Schrittmotor (1) mit vorgegebener Beschleunigungscharakteristik (91) beschleunigt wird,

- daß der Schrittmotor (1) mit konstanter Geschwindigkeit (93) bewegbar ist,

- daß der Schrittmotor (1) über eine dem Bremsweg entsprechende Anzahl von Schritten vor dem angestrebten Endpunkt der Bewegung bei vorgegebener, negativer Beschleunigungscharakteristik (92) abgebremst wird, und

- daß nach jedem durchgeführten Schritt des Schrittmotors (1) dessen Position auf eine durch den momentanen Sollwert vorgegebene Sollposition hin um einen Schritt verändert wird, wobei der weitere Bewegungsablauf des Schrittmotors (1) von seiner momentanen Position, seiner momentanen Geschwindigkeit und vom momentanen Sollwert abhängt.

2. Einrichtung zur Durchführung des Verfahrens nach Anspruch 1 mit einer Steuereinheit (3), die einen Eingang (31) für Steuerbefehle und einen mit dem Schrittmotor (1) in Verbindung stehenden Ausgang (32) aufweist, d a d u r c h   g e k e n n z e i c h n e t ,

- daß der Eingang (31) für Steuerbefehle mit einem ersten Eingang (51) eines Addiergliedes (5) in Verbindung steht, dessen zweiter Eingang (52) mit einem Ausgang (43) eines Speichers (4) verbunden ist,

- daß ein Ausgang (53) des Addiergliedes (5) mit einem Eingang (41) des Speichers (4) verbunden ist, und

- daß ein Ausgang (43) des Speichers (4) mit dem Schrittmotor (1) im Verbindung steht.

0143241

83 P 3338

FIG 1

FIG 2

FIG 3

Europäisches
Patentamt

EUROPÄISCHER RECHERCHENBERICHT

0143241

Nummer der Anmeldung

EP 84 11 1180

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 016 604 (FUJITSU FANUC Ltd.)<br><br>* Insgesamt *<br><br>--- | 1,2 | H 02 P 8/00 |
| Y | TRANSACTIONS OF INSTRUMENT OF MEASUREMENT AND CONTROL, Band 1, Nr. 4, Oktober-November 1979, Seiten 233-239, LONDON, (GB). D. HINE et al.: "A microcomputer algorithm for open loop step motor control".<br><br>* Insgesamt *<br><br>--- | 1,2 | |
| Y | GB-A-2 078 406 (WESTERN ELECTRIC)<br><br>* Seite 3, Zeilen 27-55; Figur 4 *<br><br>--- | 1,2 | |
| A | REGELUNGSTECHNISCHE PRAXIS UND PROZESS-RECHENTECHNIK, Heft 7, 1973, Seiten 167-171, MÜNCHEN, (DE) H. GOSE: "Digitale Lösungen regelungstechnischer Probleme bei numerischen Bahnsteuerungen".<br><br>* Seite 169, Absatz: "Aufbau und Arbeitsweise einer digitalen Trägheit"; Seite 171, Figuren 7,10 *<br><br>--- | 2 | |

**RECHERCHIERTE SACHGEBIETE (Int. Cl.4)**

H 02 P
F 02 D
G 05 B
G 05 D
G 06 F

-/-

Der vorliegende Recherchenbericht wurde für alle Patentansprüche erstellt.

| Recherchenort | Abschlußdatum der Recherche | Prüfer |
|---|---|---|
| DEN HAAG | 19-12-1984 | HOUILLON |

**Europäisches Patentamt**

**EUROPÄISCHER RECHERCHENBERICHT**

0143241
Nummer der Anmeldung

EP 84 11 1180
Seite 2.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 643 148 (SIEMENS)<br><br>* Anspruch *<br><br>--- | 1 | |
| A | FR-A-2 214 925 (SIEMENS)<br><br>* Insgesamt *<br><br>--- | 2 | |
| D,A | FR-A-2 503 792 (BOSCH)<br><br>----- | | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 19-12-1984 | HOUILLON |